# FASCICULE DE BREVET EUROPEEN

(11) **EP 2 750 255 B1**
(45) Date de publication et mention de la délivrance du brevet: **17.02.2016**
(21) Numéro de dépôt: 13194615.4
(22) Date de dépôt: 27.11.2013
(51) Int. Cl.: H02G 15/18

(54) **Accessoire destiné aux câbles de transport d'électricité basse tension**
Zubehör für Niederspannungskabel
Device for low voltage cables

(30) Priorité: 26.12.2012 FR 1262774
(43) Date de publication de la demande: 02.07.2014
(73) Titulaire: Nexans, 75008 Paris (FR)
(72) Inventeur: Jacques, Thierry, 08000 Charleville-Mézières (FR); Cremont, David, 08460 Thin-le-Moutier (FR); Bois, Reynald, 51100 REIMS (FR)
(74) Mandataire: Lenne, Laurence

(56) Documents cités:
- WO-A2-2007/130811
- FR-A1- 2 507 403
- JP-U- S63 131 071

## Description

L'invention concerne un accessoire destiné aux câbles de transport d'électricité basse tension.

Elle concerne plus précisément un connecteur comportant un cylindre conducteur pourvu à au moins une de ces extrémités d'éléments de connexion du conducteur d'un câble de transport d'électricité formant un raccord. En général, le connecteur comporte de tels éléments de connexion à ces deux extrémités afin de permettre la connexion de deux câbles alignés. Ces éléments de connexion sont souvent des vis radiales qui vissées chacune dans un alésage agencé dans le cylindre assurent le serrage radial du conducteur du câble dénudé à cet endroit ainsi que la connexion électrique entre ce conducteur et le cylindre. Mais ces éléments de connexion peuvent également être réalisés par poinçonnage ou sertissage, par exemple.

De tels connecteurs connus peuvent être de courte longueur ou de longueur plus grande. L'invention concerne de tels connecteurs d'une longueur supérieure à 200 mm, par exemple.

Par ailleurs, comme décrit dans le document de brevet FR 82 09554, il est connu de réaliser sur des raccords de câbles électriques une isolation au moyen d'un manchon tubulaire préformé en matière isolante mis en place sur le raccord et sur l'extrémité de câble correspondant.

Ce manchon est roulé ou plié sur un support approprié destiné à permettre le montage du manchon sur le câble par enfilement du câble dans le support et déroulement ou dépliage du manchon retiré du support et mis en place sur le câble. Le support peut être pourvu d'un tapis de glissement en matière plastique facilitant son enlèvement.

Classiquement la matière du manchon est élastique et se rétracte radialement sur le raccord, un fois le support enlevé. Ce manchon est couramment appelé manchon rétractable à froid.

Le support, qui peut donc être de constitution relativement complexe, constitue une pièce perdue dans le sens où il n'est plus utilisé, une fois le manchon posé sur le raccord.

Par ailleurs, il est connu du document de brevet WO 2007/130811 un procédé de connexion et un accessoire destiné à la connexion de deux câbles de transport d'électricité moyenne ou haute tension, comportant un connecteur comportant un cylindre conducteur et pouvant comporter également un manchon rétractable à froid roulé à ses extrémités. Ce connecteur est destiné être associé à deux rubans hélicoïdaux de support du manchon et de mise en place de ce dernier par rétraction du manchon déroulé sur les câbles.

Destiné à la moyenne ou la haute tension, cet accessoire nécessite également des supports du manchon expansé qui est destiné à former non seulement une isolation électrique des extrémités de câbles de transport électrique connecté, mais également un maintien mécanique du connecteur cylindrique.

L'invention propose un procédé de connexion et un accessoire de constitution et d'utilisation particulièrement simple et supprimant la nécessité de pièces perdues. Elle diminue donc le nombre de pièces nécessaires pour le montage d'un connecteur de câbles de transport d'électricité basse tension.

Pour ce faire, l'invention propose un procédé de connexion d'au moins un câble de transport d'électricité basse tension au moyen d'un accessoire comportant un connecteur comportant un cylindre conducteur pourvu à au moins une de ses extrémités d'éléments de connexion du conducteur d'un câble de transport d'électricité et comportant également un manchon rétractable à froid disposé directement sur ledit cylindre et dont au moins une des extrémités est pliée ou roulée, caractérisé en ce que le conducteur de ce câble dénudé de sa gaine isolante est connecté à un dit élément de connexion d'extrémité de l'accessoire et ledit manchon rétractable à froid de l'accessoire est déplié ou déroulé directement sur lesdits éléments de connexion, sur ledit conducteur et sur une partie de ladite gaine isolante du câble.

L'invention concerne également un accessoire comportant un connecteur comportant un cylindre conducteur pourvu à au moins une de ses extrémités d'éléments de connexion du conducteur d'un câble de transport d'électricité et comportant également un manchon rétractable à froid disposé directement sur ledit cylindre et dont au moins une des extrémités est pliée ou roulée, pour la mise en oeuvre d'un tel procédé, caractérisé en ce qu'il est destiné à la basse tension, en ce que ledit manchon rétractable à froid est disposé directement sur ledit cylindre hors lesdits éléments de connexion électriques et mécaniques et en ce que les deux extrémités dudit manchon sont pliées l'une sur l'autre.

Le mode de pliage ou de roulage est adapté à la longueur de connexion nécessaire et donc à la longueur du cylindre de connexion.

Sur ce cylindre, les éléments de connexion doivent restés accessibles pour permettre dans un premier temps la connexion mécanique et électrique d'un câble à l'une ou à chaque extrémité de ce cylindre de connexion. C'est donc la longueur libre hors ou entre les éléments de connexion qui peut permettre la mise en place du manchon rétractable dans le connecteur conforme à l'invention.

Par ailleurs, une fois déplié ou déroulé, le manchon doit recouvrir et isoler ces éléments de connexion et une partie du câble ou des câbles connectés. Sa longueur totale dépend donc de la longueur de connexion nécessaire et son mode de pliage ou de roulage est choisi en fonction de cette longueur totale et de la longueur libre sur le cylindre de connexion.

De préférence, lesdits éléments de connexion sont des vis radiales vissées chacune dans un alésage agencé dans ledit cylindre.

L'invention est décrite ci-après plus en détail à l'aide de figure ne représentant que des modes de réalisation préférés de l'invention.
La figure 1 est une vue en perspective représentant un connecteur selon l'art antérieur.
La figure 2 est une vue en perspective représentant un connecteur selon un premier mode de réalisation de l'invention.
Les figures 3A à 3C sont des vues schématiques en coupe longitudinale illustrant la mise en place d'un connecteur selon ce premier mode de réalisation de l'invention.
Les figures 4A à 4C sont des vues schématiques en coupe longitudinale illustrant la mise en place d'un connecteur selon un deuxième mode de réalisation de l'invention.
La figure 5 est une vue schématique en coupe longitudinale illustrant un connecteur selon un troisième mode de réalisation de l'invention.

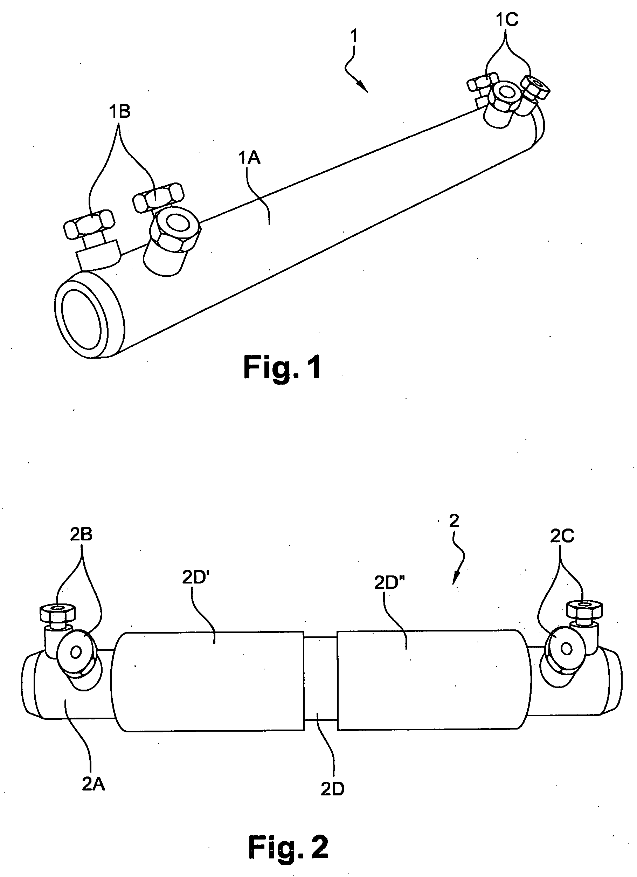

Comme représenté sur la figure 1, selon l'art antérieur, un connecteur 1 basse tension comporte un cylindre conducteur 1A pourvu à au moins une de ces extrémités d'éléments de connexion du conducteur d'un câble de transport d'électricité. Ce cylindre 1A a de préférence une longueur d'au moins 200 mm et/ou un rapport entre sa longueur et son diamètre extérieur supérieur à 6.

Ces éléments de connexion sont de préférence des vis radiales 1B vissées chacune dans un alésage agencé dans le cylindre 1 A.

Ce cylindre conducteur 1A est classiquement pourvu à ces deux extrémités de tels éléments de connexion 1 B, 1C.

Selon l'invention, un tel connecteur comporte également un manchon rétractable à froid disposé directement sur le cylindre et dont au moins une des extrémités est pliée ou roulée, afin de former un accessoire.

Par manchon rétractable à froid, il est entendu un manchon en matériau isolant élastique de type caoutchouc ou un manchon élastique plus complexe à multi-couches avec éventuellement une couche conductrice.

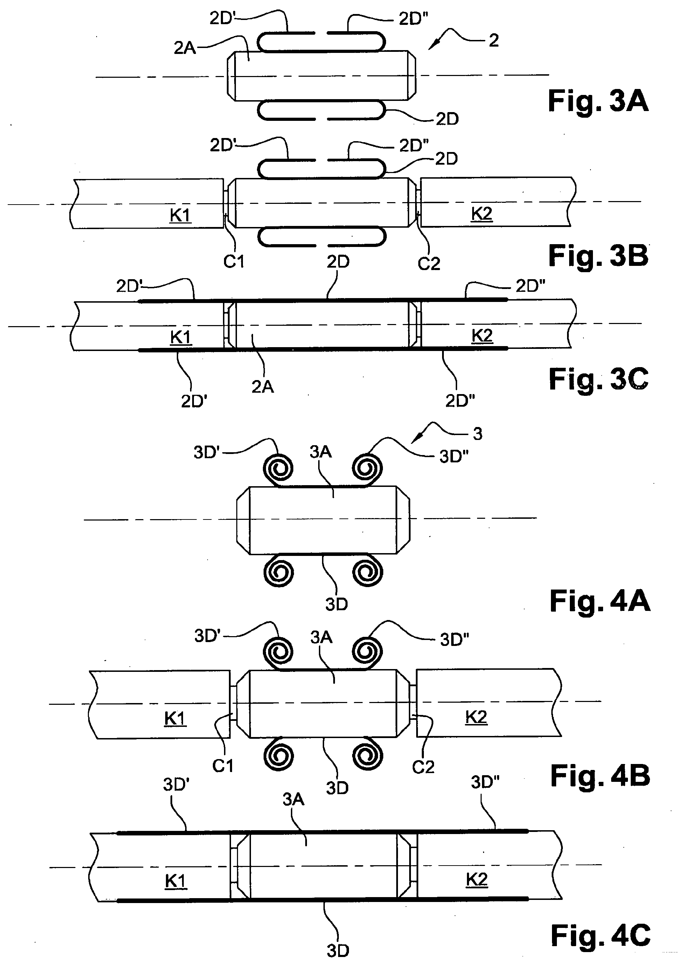

Selon un premier mode de réalisation représenté sur les figures 2 et 3A, un accessoire 2, conforme à l'invention, comporte donc un connecteur formé d'un cylindre conducteur 2A pourvu à au moins une de ces extrémités d'éléments de connexion du conducteur d'un câble de transport d'électricité et également un manchon rétractable à froid 2D disposé directement sur le cylindre 2B et dont au moins une des extrémités est pliée ou roulée.

Selon ce mode de réalisation, le cylindre conducteur 2A est pourvu à ces deux extrémités d'éléments de connexion constitués de préférence de vis radiales 2B, 2C vissées chacune dans un alésage agencé dans le cylindre 2A et le manchon rétractable 2D a ces deux extrémités 2D', 2D" pliées entre ces éléments de connexion.

Comme schématisé que les figures 3B et 3C, le conducteur dénudé C1, C2 de l'extrémité de deux câbles basse tension alignés K1, K2 est connecté à chaque extrémité du connecteur, puis les extrémités pliées du manchon 2D sont dépliées pour venir recouvrir ces deux raccords et les isoler.

Selon un deuxième mode de réalisation représenté sur la figure 4A, un accessoire 3, conforme à l'invention, comporte donc un connecteur formé d'un cylindre conducteur 3A pourvu à au moins une de ces extrémités d'éléments de connexion du conducteur d'un câble de transport d'électricité et également un manchon rétractable à froid 3D disposé directement sur le cylindre 3B et dont au moins une des extrémités est roulée entre ces éléments de connexion.

Selon ce mode de réalisation, le cylindre conducteur 3A est pourvu à ces deux extrémités d'éléments de connexion constitués de préférence de vis radiales non représentées vissées chacune dans un alésage agencé dans le cylindre 3A et le manchon rétractable 3D a ces deux extrémités roulées.

Comme schématisé que les figures 4B et 4C, le conducteur dénudé C1, C2 de l'extrémité de deux câbles basse tension alignées est connecté à chaque extrémité du connecteur, puis les extrémités roulées du manchon 3D sont déroulées pour venir recouvrir ces deux raccords et les isoler.

Grâce à ce deuxième mode de réalisation, l'invention peut s'appliquer à des cylindres conducteurs de plus petite longueur, en comparaison au premier mode de réalisation, puisque la longueur libre nécessaire à la disposition du manchon 3D roulé est bien moindre que celle nécessaire à la disposition du manchon plié.

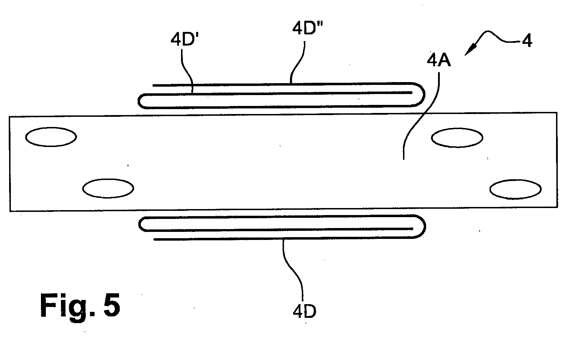

Selon un troisième mode de réalisation représenté sur la figure 5, un accessoire 4, conforme à l'invention, comporte donc un connecteur formé d'un cylindre conducteur 4A pourvu à au moins une de ces extrémités d'éléments de connexion du conducteur d'un câble de transport d'électricité et également un manchon rétractable à froid 4D disposé directement sur le cylindre 4B et dont les deux extrémités sont pliées l'une sur l'autre, contrairement au premier mode de réalisation représenté sur la figure 3A, où ces extrémités sont pliées indépendamment l'une de l'autre.

Selon ce mode de réalisation, le cylindre conducteur 4A est pourvu à ces deux extrémités d'éléments de connexion constitués de préférence de vis radiales non représentées vissées chacune dans un alésage agencé dans le cylindre 4A.

Grâce à ce troisième mode de réalisation, l'invention peut s'appliquer à des cylindres conducteurs de plus petite longueur, en comparaison au premier mode de réalisation, puisque la longueur libre nécessaire à la disposition du manchon 4D plié peut être divisée par deux.

Toujours dans le cadre de l'invention, le connecteur peut comporter un cylindre conducteur pourvu à uniquement une de ces extrémités d'éléments de connexion du conducteur d'un câble de transport d'électricité et le manchon rétractable à froid peut ne comprendre qu'une seule extrémité correspondante pliée ou roulée. A cette extrémité du cylindre est connecté le conducteur d'un seul câble de transport d'électricité, l'autre extrémité du cylindre pouvant alors être conçue pour une autre fonction.

Par ailleurs, le pliage ou le roulage de l'extrémité du manchon rétractable à froid peut être différent de ceux précédemment décrit, en particulier pour s'adapter à la longueur libre nécessaire à la disposition du manchon. Ce dernier peut par exemple être plié en accordéon, en plusieurs plis superposés.

## Revendications

1. Procédé de connexion d'au moins un câble de transport d'électricité basse tension (K1, K2) au moyen d'un accessoire (2, 3, 4) comportant un connecteur comportant un cylindre conducteur (2A, 3A) pourvu à au moins une de ses extrémités d'éléments de connexion du conducteur (C1, C2) d'un câble de transport d'électricité (K1, K2) et comportant également un manchon rétractable à froid (2D, 3D) disposé directement sur ledit cylindre et dont au moins une des extrémités est pliée ou roulée, **caractérisé en ce que** le conducteur (C1, C2) de ce câble (K1, K2) dénudé de sa gaine isolante est connecté à un dit élément de connexion d'extrémité de l'accessoire et ledit manchon rétractable à froid (2D, 3D) de l'accessoire est déplié ou déroulé directement sur lesdits éléments de connexion, sur ledit conducteur et sur une partie de ladite gaine isolante du câble (K1, K2).

2. Accessoire (2, 3, 4) comportant un connecteur comportant un cylindre conducteur (2A, 3A) pourvu à au moins une de ses extrémités d'éléments de connexion du conducteur (C1, C2) d'un câble de transport d'électricité (K1, K2) et comportant également un manchon rétractable à froid (2D, 3D) disposé directement sur ledit cylindre et dont au moins une des extrémités est pliée ou roulée, pour la mise en oeuvre d'un procédé selon la revendication 1, **caractérisé en ce qu'**il est destiné à la basse tension, **en ce que** ledit manchon rétractable à froid (2D, 3D) est disposé directement sur ledit cylindre hors lesdits éléments de connexion électriques et mécaniques et **en ce que** les deux extrémités dudit manchon (4D) sont pliées l'une sur l'autre.

3. Accessoire selon la revendication précédente, **caractérisé en ce que** lesdits éléments de connexion sont des vis radiales (2B, 2C, 3B, 3C) vissées chacune dans un alésage agencé dans ledit cylindre.

## Patentansprüche

1. Verbindungsverfahren mindestens eines Niederspannungs-Stromtransportkabels (K1, K2) mittels eines Zubehörs (2, 3, 4), das einen Verbinder aufweist, der einen leitenden Zylinder (2A, 3A) aufweist, der an mindestens einem seiner Enden mit Verbindungselementen des Leiters (C1, C2) eines Stromtransportkabels (K1, K2) ausgestattet ist und ebenfalls eine kalt schrumpfbare Hülse (2D, 3D) aufweist, die direkt auf dem Zylinder angeordnet ist und von der mindestens eines der Enden gefaltet oder gerollt ist, **dadurch gekennzeichnet, dass** der von seiner isolierenden Hülle befreite Leiter (C1, C2) dieses Kabels (K1, K2) mit einem Verbindungselement am Ende des Zubehörs verbunden ist und die kalt schrumpfbare Hülse (2D, 3D) des Zubehörs direkt auf die Verbindungselemente, auf den Leiter und auf einen Teil der isolierenden Hülle des Kabels (K1, K2) entfaltet oder abgerollt ist.

2. Zubehör (2, 3, 4), das einen Verbinder aufweist, der einen leitenden Zylinder (2A, 3A) aufweist, der an mindestens einem seiner Enden mit Verbindungselementen des Leiters (C1, C2) eines Stromtransportkabels (K1, K2) ausgestattet ist und ebenfalls eine kalt schrumpfbare Hülse (2D, 3D) aufweist, die direkt auf dem Zylinder angeordnet ist und von der mindestens eines der Enden gefaltet oder gerollt ist, für die Umsetzung eines Verfahrens nach Anspruch 1, **dadurch gekennzeichnet, dass** es für Niederspannung bestimmt ist, dass die kalt schrumpfbare Hülse (2D, 3D) direkt auf dem Zylinder ohne die elektrischen und mechanischen Verbindungsmittel angeordnet ist und dass die zwei Enden der Hülse (4D) übereinander gefaltet sind.

3. Zubehör nach vorangehendem Anspruch, **dadurch gekennzeichnet, dass** die Verbindungsmittel radiale Schrauben (2B, 2C, 3B, 3C) sind, die jeweils in eine in dem Zylinder ausgebildete Bohrung geschraubt sind.

## Claims

1. A method for connecting at least one low voltage electric power transport cable (K1, K2) by means of an accessory (2, 3, 4) including a connector including a conducting cylinder (2A, 3A) provided at least at one of its ends with elements for connecting the conductor (C1, C2) of an electric power transport cable (K1, K2) and also including a cold retractable sleeve (2D, 3D) directly positioned on said cylinder and at least one of the ends of which is folded or rolled, **characterized in that** the conductor (C1, C2) of this cable (K1, K2) stripped of its insulating sheath is connected to a said end connecting element of the accessory and said cold retractable sleeve (2D, 3D) of the accessory is unfolded or unrolled directly on said connecting elements, on said conductor and on a portion of said insulating sheath of the cable (K1, K2).

2. An accessory (2, 3, 4) including a connector including a conducting cylinder (2A, 3A) provided at least at one of its ends with elements for connecting the conductor (C1, C2) of an electric power transport cable (K1, K2) and also including a cold retractable sleeve (2D, 3D) directly positioned on said cylinder and at least one of the ends of which is folded or rolled, for applying a method according to claim 1, **characterized in that** it is intended for low voltage, **in that** the cold retractable sleeve (2D, 3D) is directly positioned on said cylinder out of said electric and mechanical connection elements and **in that** both ends of said sleeve (4D) are folded over each other.

3. The accessory according to the preceding claim, **characterized in that** said connection means are radial screws (2B, 2C, 3B, 3C) each screwed into a bore laid out in said cylinder.
